# EUROPÄISCHE PATENTSCHRIFT

(11) **EP 3 168 581 B1**
(45) Veröffentlichungstag und Bekanntmachung des Hinweises auf die Patenterteilung: **19.01.2022**
(21) Anmeldenummer: 15194472.5
(22) Anmeldetag: 13.11.2015
(51) Int. Cl.: G01S 13/88, G01F 23/284, H01Q 1/22

(54) **HORNANTENNE UND RADAR-FÜLLSTANDMESSGERÄT MIT EINER HORNANTENNE**
HORN ANTENNA AND RADAR FILL LEVEL MEASURING DEVICE WITH A HORN ANTENNA
ANTENNE A CORNET ET APPAREIL DE MESURE DE NIVEAU DE REMPLISSAGE RADAR DOTE D'UNE ANTENNE A CORNET

(43) Veröffentlichungstag der Anmeldung: 17.05.2017
(73) Patentinhaber: VEGA Grieshaber KG, 77709 Wolfach (DE)
(72) Erfinder: Hengstler, Clemens, 77716 Haslach (DE); Skowaisa, Jürgen, 77761 Schiltach (DE)
(74) Vertreter: Patentanwälte Bauer Vorberg Kayser

(56) Entgegenhaltungen:
- DE-A1-102005 022 493
- DE-A1-102005 056 042
- DE-U1-202014 100 911
- US-A1- 2002 126 061

## Beschreibung

Die vorliegende Erfindung betrifft eine Hornantenne für ein Radarmessgerät, insbesondere ein Radar-Füllstandmessgerät gemäß dem Oberbegriff des Patentanspruchs 1.

Aus dem Stand der Technik sind Radarmessgeräte, beispielsweise Radar-Füllstandmessgeräte bekannt, die nach dem Laufzeitprinzip einen Füllstand eines in einem Behälter befindlichen Füllguts, insbesondere von Flüssigkeiten und Schüttgütern detektieren. Solche Radar-Füllstandmessgeräte sind beispielsweise mit Hornantennen ausgestattet, über die ein eingekoppeltes HF-Signal in Richtung des Füllgutes abgestrahlt und von diesem reflektiert wird. In einem kombinierten Sende- und Empfangssystem des Radar-Füllstandmessgerätes werden die vom Füllgut reflektierten Mikrowellenimpulse erfasst und durch Messung der Laufzeit dieser Pulse ein Abstand von dem Füllstandmessgerät zu dem Füllgut ermittelt.

Hornantennen haben grundsätzlich einen einfachen und robusten Aufbau, einen sehr guten Wirkungsgrad und sind kostengünstig herzustellen. Sobald allerdings eine Innenseite des Antennenhorns verschmutzt wird, wirkt sich dies negativ auf die Leistungsfähigkeit der Hornantenne aus. Je nach Art des Mediums oder der herrschenden Prozessbedingungen können in den Behältern Unter- oder sehr hohe Überdrücke, sehr niedrige oder sehr hohe Temperaturen herrschen, weiter können die Medien sehr aggressiv und/oder korrosiv sein. Zumeist ist es auch erforderlich, dass die Behälter abgedichtet sind, so dass die Medien nicht in die Umwelt entweichen können.

Hornantennen sind bauformbedingt eher ungeeignet, sobald Überdrücke oder aggressive Medien auftreten und können aufgrund des direkten Zugangs zum Erregerelement der Antenne nicht in explosionskritischen Anwendungen eingesetzt werden.

Aus dem Stand der Technik ist es daher bekannt, die Antennen solcher Füllstandmessgeräte gegen Verschmutzung und/oder Korrosion aufgrund einer aggressiven Messumgebung zu schützen. Dies wird beispielsweise dadurch erreicht, dass die Antennen mit einem Radom vorderseitig abgedeckt oder das Antennenhorn mit einem Medium, z. B. Kunststoff gefüllt wird. Beispielweise offenbart DE 10 2005 056 042 A1 ein Radarfüllstandmessgerät mit einer Hornantenne, die ein Antennenhorn und eine Linse aufweist, wobei das Antennenhorn durch die Linse nach außen hin abgeschlossen ist. DE 10 2005 022 493 A1 offenbart auch mehrere Beispiele von Radarfüllstandmessgeräten mit einer Hornantenne gemäß dem Stand der Technik.

Die Abdeckung der Hornantenne mit einem Radom kann zwar Verschmutzungen und aggressive Medien aus dem Antennenhorn fernhalten, solche Hornantennen sind aber nach wie vor nicht zum Einsatz in Über- oder Unterdruckumgebungen geeignet.

Im Stand der Technik existieren daher auch Hornantennen, bei denen das Antennenhorn vollständig mit einem festen Medium, z.B. Kunststoff gefüllt ist.

Bei einem Einsatz solcher Radar-Füllstandmessgeräte in Hygieneanwendungen, bspw. in der Lebensmittel- oder Pharmaindustrie ist es notwendig, die verwendeten Behälter regelmäßig von Verschmutzungen zu reinigen. Bei den eingesetzten Reinigungsprozeduren wird bspw. beim sogenannten Autoklavieren Dampf mit hoher Temperatur und hohem Druck verwendet um eine Sterilisation des Behälters zu erreichen.

Da die Radar-Füllstandmessgeräte mit Hornantennen teilweise nicht oder nur eingeschränkt Überdruckfähig sind und außerdem temperaturempfindliche Komponenten enthalten, müssen die Messgeräte vor einem Autoklavieren regelmäßig demontiert werden.

Da eine Demontage und anschließende Abdichtung des Behälters zeit- und personalaufwändig sind, wird dies als Nachteil empfunden.

Es ist die Aufgabe der vorliegenden Erfindung, eine Hornantenne sowie ein Radarfüllstandmessgerät mit einer Hornantenne zur Verfügung zu stellen, die diese Nachteile nicht aufweisen.

Diese Aufgabe wird durch eine Hornantenne mit den Merkmalen des Patentanspruchs 1 sowie ein Radarmessgerät, insbesondere ein Radar-Füllstandmessgerät mit den Merkmalen des Patentanspruchs 14 gelöst.

Vorteilhafte Weiterbildungen sind Gegenstand abhängiger Patentansprüche.

Eine erfindungsgemäße Hornantenne für ein Radarmessgerät, insbesondere ein Radar-Füllstandmessgerät weist ein vorderseitig in einer Hauptabstrahlrichtung abstrahlendes Antennenhorn mit einer rückseitigen Speisung, eine Befestigungsanordnung zur Befestigung an einem Behälter und eine wenigstens teilweise Füllung des Antennenhorns mit einem Feststoff auf, wobei das Antennenhorn wenigstens zweiteilig mit einem ersten gerätseitigen Teil und einem zweiten behälterseitigen Teil ausgebildet ist.

Durch eine zweiteilige Ausgestaltung des Antennenhorns besteht die Möglichkeit, dass der geräteseitige Teil des Antennenhorns an dem Behälter beispielsweise bei einer Reinigungsprozedur mit hohen Drücken und/oder Temperaturen verbleibt, während der erste geräteseitige Teil, mit dem insbesondere eine temperaturempfindliche Messelektronik verbunden sein kann, von dem Behälter abgenommen werden kann. Es können hierzu beispielsweise Dichtungen zwischen dem Behälter und dem zweiten Teil des Antennenhorns angeordnet sein.

Eine günstige Anordnung kann insbesondere erreicht werden, wenn der zweite Teil als Befestigungsanordnung ausgebildet ist. Durch eine Ausbildung des zweiten Teils des Antennenhorns als Befestigungsanordnung ist es möglich mit einer geringen Anzahl von Bauteilen ein in einfacher Weise an einem Behälter befestigbare Hornantenne bereitzustellen, die gleichzeitig eine Auftrennung und damit Entfernung beispielsweise temperaturempfindlicher Komponenten beispielsweise bei einer Reinigung ermöglicht.

Die Befestigungsanordnung bzw. der zweite Teil des Antennenhorns kann dazu insbesondere als Flansch, insbesondere Klemmflansch oder Schraubflansch, als Verschraubung, beispielsweise Rohrverschraubung oder als Einschweißstutzen ausgebildet sein. Durch die Ausbildung der Befestigungsanordnung als Flansch, beispielsweise als Schraubflansch oder Klemmflansch besteht die Möglichkeit, die Hornantenne an üblicherweise an Behältern befestigten Aufnahmevorrichtungen, die typischerweise als Flansch oder dergleichen ausgebildet sind, zu befestigen.

Eine mögliche Ausgestaltungsform ist die sogenannte Tri-Clamp-Verbindung.

Eine vorteilhafte Ausgestaltung wird erreicht, wenn der erste Teil und der zweite Teil des Antennenhorns über eine Verbindungsanordnung lösbar verbindbar ausgebildet sind. Eine solche Verbindungsanordnung kann dabei beispielsweise als Verschraubung, Bajonettverbindung, Klemmverbindung, Steckverbindung oder wiederum als Flansch ausgebildet sein. Insbesondere einfach und werkzeuglos zu lösende Verbindungen wie beispielsweise Bajonettverbindungen oder Steckverbindungen in Form von Schnellkupplungen ermöglichen eine besonders einfache Erstellung und Lösung der Verbindung zwischen den beiden Teilen des Antennenhorns. Bevorzugt werden dabei insbesondere Ausgestaltungen, bei denen die beiden Teile nicht gegeneinander verdrehet werden müssen, da auf diese Weise eine Polarisation der ausgesandten Strahlung vor einem Zusammenfügen festgelegt werden kann.

Eine Verschraubung kann beispielsweise dadurch erreicht werden, dass der erste Teil an dem umlaufenden Rand und eine sich an dem Rand abstützende Überwurfmutter und der zweite Teil ein korrespondierend zu der Überwurfmutter ausgebildetes Gewinde, insbesondere Außengewinde aufweist. Eine derartige Verschraubung ermöglicht ebenfalls eine einfache und sichere Verbindung der beiden Teile, wobei die beiden Teile bei einem Zusammenfügen nicht gegeneinander verdreht werden müssen.

Die Verbindungsanordnung kann ferner eine Anpressvorrichtung, beispielsweise in Form einer Federvorspannung, aufweisen, die sicherstellt, dass der erste Teil und der zweite Teil mit einem definierten Druck aneinander gepresst werden. Dies kann insbesondere vorteilhaft sein, da die Reflexionen innerhalb der Hornantenne, insbesondere an einer Verbindung zwischen dem ersten Teil und dem zweiten Teil unbedingt vermieden werden müssen.

Um eine voreingestellte Polarisation der abgestrahlten elektromagnetischen Welle auch nach einem Trennen und Wiederzusammenfügen der Teile des Antennenhorns sicher zu gewährleisten kann es von Vorteil sein, wenn der erste Teil und der zweite Teil so ausgebildet sind, dass sie in verbundenem Zustand eine definierte Ausrichtung zueinander aufweisen. Eine definierte Ausrichtung zueinander umfasst insbesondere eine definierte Ausrichtung in Axial- und Umfangsrichtung. Eine solche Ausrichtung der beiden Teile zueinander kann beispielsweise durch eine geeignete verdrehsichere Außenkontur des anderen Teils und eine korrespondierend dazu ausgebildete Innenkontur des zweiten Teils, geeignete Anformungen oder definierte Anschläge beim Zusammenfügen mit einer Schraubverbindung gewährleistet werden.

Vorteilhafterweise weist der erste Teil eine erste Füllung und der zweite Teil eine zweite Füllung auf, wobei zumindest die zweite Füllung so ausgebildet ist, dass die fokussierenden Eigenschaften für ein von der Hornantenne abgestrahltes elektromagnetisches Feld aufweist. Solche fokussierten Eigenschaften können beispielsweise durch eine konvexe Ausgestaltung einer in Hauptabstrahlrichtung vorne liegenden Oberfläche beispielsweise in Kegelform oder Linsenform erreicht werden. Die zweite Füllung ist erfindungsgemäß so ausgestaltet , dass sie gemeinsam mit dem zweiten Teil einen Behälter, wenn sie an diesem angeordnet ist, nach außen hin abdichtet. Dabei kann es insbesondere sinnvoll sein, ein Material der zweiten Füllung hinsichtlich seiner thermischen, mechanischen und/oder chemischen Eigenschaften zu optimieren, insbesondere eine hohe Widerstandsfähigkeit bei hohen Temperaturen sowie eine gute Druckaufnahmefähigkeit bzw. mechanische Stabilität vorzusehen.

Eine dem ersten Teil zugewandte Oberfläche der zweiten Füllung kann ferner konvex ausgebildet sein, was Schmutz- und/oder Feuchtigkeitsan- und -ablagerungen in diesem Bereich bei abgenommenen ersten Teil deutlich erschwert. Auf diese Weise wird erreicht, dass die Anordnung insgesamt deutlich schmutzresistenter wird.

Wenn die zweite Füllung sich in Hauptabstrahlrichtung konisch erweiternd ausgebildet ist wird einerseits eine vollständige Ausfüllung des zweiten Teils des Antennenhorns erreicht und andererseits eine selbstzentrierende Anordnung geschaffen, die an ihrer gesamten Umfangsfläche an dem zweiten Teil des Antennenhorns aufliegt und damit eine große Überdruckfähigkeit aufweist.

Die zweite Füllung kann ferner einen flanschartigen Rand aufweisen, der insbesondere bei einer flanschartigen Verbindung zwischen dem zweiten Teil und dem Behälter eingeklemmt und beispielsweise mit umlaufenden Dichtungen abgedichtet sein kann. Im Bereich eines solchen flanschartigen Randes kann eine gute Abdichtung erreicht und auch eine gute Abstützung der zweiten Füllung zur Aufnahme von druckinduzierten Kräften erreicht werden.

Die zweite Füllung kann beispielsweise aus Poyletheretherketon (PEEK) einem Hochleistungskunststoff mit hoher mechanischer, thermischer und chemischer Stabilität ausgebildet sein. Auf diese Weise kann die vorliegende Hornantenne in Über- und Unterdruck beaufschlagten Umgebungen mit chemisch aggressiven Medien und hohen Temperaturschwankungen eingesetzt werden.

Als weitere Materialien für die zweite Füllung kommen beispielsweise Keramik, Glas, Polyvinylideenfluorid (PVDF), Polytetrafluorethylen (PTFE) oder Polyphenylensulfid (PPS) in Frage. In Frage kommen ferner weitere Hochleistungskunststoffe sowie faserverstärkte Kunststoffe, die besonders hohe mechanische Belastungen aufnehmen können.

Die erste Füllung kann, da sie nur geringeren Umgebungseinflüssen ausgesetzt ist aus einem Kunststoff mit optimierten HF-Eigenschaften, beispielsweise aus Polytetrafluorethylen PTFE), Polypropylen (PP) oder Polyethylen (PE) oder anderen Kunststoffen mit geeigneten Hochfrequenzeigenschaften gefertigt sein.

Ein erfindungsgemäßes Radar-Füllstandmessgerät mit einer Hornantenne mit einem vorderseitig in einer Hauptabstrahlrichtung abstrahlten Antennenhorn mit einer rückseitigen Speisung, einer Befestigungsanordnung zur abdichtenden Befestigung an einem Behälter und einer wenigstens teilweisen Füllung des Antennenhorns mit einem Feststoff zeichnet sich durch ein zweiteilig ausgebildetes Antennenhorn mit einem ersten geräteseitigen Teil und einem zweiten behälterseitigen Teil aus, wobei das Antennenhorn der Hornantenne vorteilhafterweise mit der obigen Beschreibung ausgestaltet ist.

Die vorliegende Erfindung wird nachfolgend anhand von Ausführungsbeispielen unter Bezugnahme auf die beigefügten Figuren eingehend erläutert. Es zeigen:
- Figur 1: ein erstes Ausführungsbeispiel eines Radar-Füllstandmessgerätes mit einer Hornantenne gemäß der vorliegenden Anmeldung,
- Figur 2: ein zweites Ausführungsbeispiels eines Radar-Füllstandmessgerätes,
- Figur 3: ein drittes Ausführungsbeispiel eines Radar-Füllstandmessgerätes,
- Figuren 4a und 4b: zwei unterschiedliche Ausgestaltungen der zweiten Füllung des Antennenhorns und
- Figuren 5a und 5b: ein viertes Ausführungsbeispiel eines Radar-Füllstandmessgerätes in getrenntem Zustand.

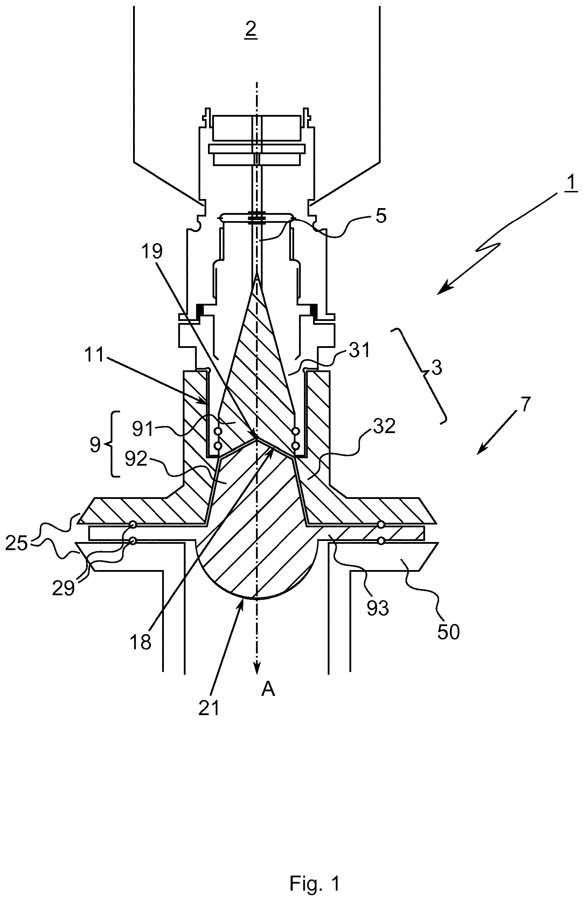

Figur 1 zeigt ein erstes Ausführungsbeispiel eines Radar-Füllstandmessgerätes mit einer Hornantenne 1 gemäß der vorliegenden Anmeldung.

Die Hornantenne 1 ist im Wesentlichen als sich in einer Hauptabstrahlrichtung A trichterförmig erweiterndes Antennenhorn 3 ausgebildet, das im vorliegenden Ausführungsbeispiel mit einer Füllung 9, bestehend aus einer rückseitig angeordneten ersten Füllung 91 und einer vorderseitig angeordneten zweiten Füllung 92, gefüllt ist.

Rückseitig ist ein erster Teil 31 des Antennenhorns 3 mit einer als Hohlleiter ausgebildeten Speisung 5 verbunden, wobei der Hohlleiter 5 im vorliegenden Ausführungsbeispiel unmittelbar in das sich trichterförmig erweiternde Antennenhorn 3 übergeht.

Ein vorderseitiger Teil 32 des Antennenhorns 3 ist als Befestigungsanordnung 7 vorliegend als Klemmflansch ausgebildet. Über die Befestigungsanordnung 7 ist es möglich, die Hornantenne 1 mit einem Behälter 50, der eine korrespondierend zu dem Klemmflansch ausgebildeten Befestigungsanordnung aufweist, zu befestigen. Der Klemmflansch und der Behälter 50 weisen hierzu eine geeignet ausgebildete Klemmkontur 25 auf, die mit einem im vorliegenden Ausführungsbeispiel nicht dargestellten Klemmbügel 27 aneinander fixiert werden können.

Die behälterseitig in dem zweiten Teil 32 des Antennenhorns 3 angeordnete zweite Füllung 92 ist im vorliegenden Ausführungsbeispiel mit einer konvex ausgestalteten kugelsegmentförmigen freien Oberfläche 21 versehen, an die sich ein in Radialrichtung R, d. h. insbesondere senkrecht zur Hauptabstrahlrichtung A erstreckender Rand 93 einstückig anschließt. Der Rand 93 ist derart ausgebildet, dass er zwischen der Befestigungsanordnung 7 des Füllstandmessgerätes und dem korrespondierend dazu ausgebildeten Klemmflansch des Behälters 50 eingeklemmt werden kann und durch entsprechend angeordnete Dichtungen 29 einen mediumsdichten Abschluss des Behälters 50 gewährleistet. Eine zweite Oberfläche 19 der zweiten Füllung 92, die in Richtung des ersten Teils 31 des Antennenhorns 3 orientiert ist, ist im vorliegenden Ausführungsbeispiel konvex, insbesondere kegelförmig ausgestaltet. Sich auf der zweiten Oberfläche 19 niederschlagendes Kondensat oder andere Flüssigkeiten können aufgrund dieser Ausgestaltung besonders einfach ablaufen.

Die erste Füllung 91 des ersten Teils 31 des Antennenhorns 3 weist eine zu der zweiten Oberfläche 19 korrespondierend ausgebildete erste Oberfläche 18 auf, die im vorliegenden Ausführungsbeispiel entsprechend konkav mit einer trichterförmigen Vertiefung ausgebildet ist. Die erste Füllung 91 ist in dem ersten Teil 31 mit weiteren Dichtungen 34 umlaufend abgedichtet, so dass auch der erste Teil 31 vor einem Eindringen von Verunreinigungen und/oder einem flüssigen Medium geschützt ist. Der erste Teil 31 und der zweite Teil 32 sind im vorliegenden Ausführungsbeispiel über eine Verbindungsanordnung 11, die beispielsweise als Einschraubverbindung ausgebildet sein kann, verbunden.

Rückseitig weist die Hornantenne 1 eine Speisung 5, die im vorliegenden Ausführungsbeispiel als das Antennenhorn 3 speisender Hohlleiter ausgebildet ist, auf. Der Hohlleiter dient im vorliegenden Ausführungsbeispiel als Verbindung des Antennenhorns 3 mit einer die Hochfrequenzsignale erzeugenden Anordnung, die in einer Elektronik 2 des Füllstand-Messgerätes angeordnet ist.

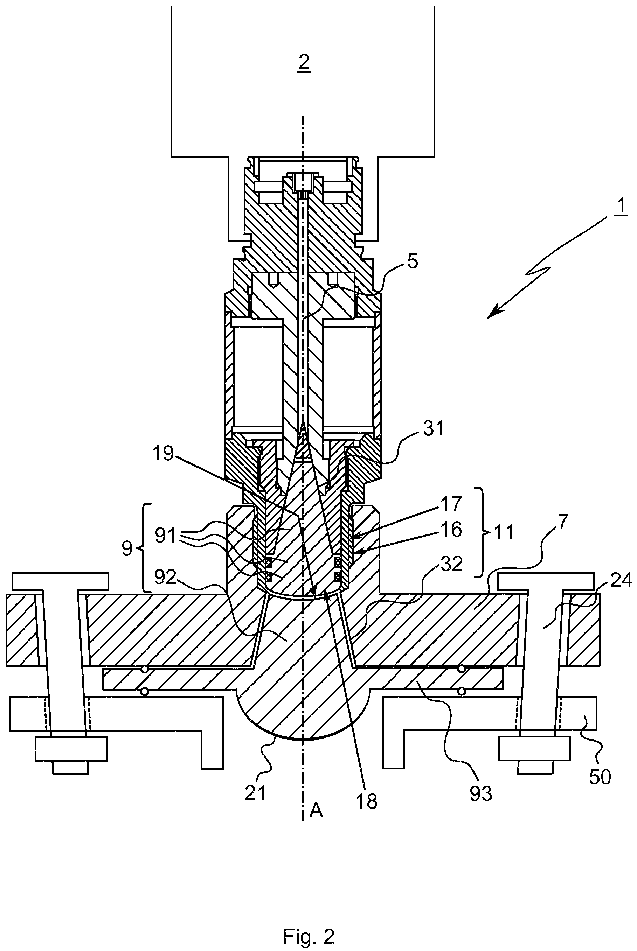

Figur 2 zeigt ein zweites Ausführungsbeispiel eines Radar-Füllstandmessgerätes mit einer Hornantenne 1 gemäß der vorliegenden Anmeldung.

Das Ausführungsbeispiel gemäß Figur 2 weist den gleichen grundlegenden Aufbau wie das Ausführungsbeispiel gemäß Figur 1 auf. Die erste Füllung 91 weist dazu von hinten nach vorne gesehen, d. h. ausgehend vom Hohlleiter 5 in Richtung der Hauptabstrahlrichtung folgende Abschnitte auf: Einen kegelförmigen Abschnitt, einen kegelstumpfförmigen Abschnitt, zylindrischen Abschnitt mit umlaufenden, in Nuten angeordneter Dichtungen, sowie eine als vorderen Abschluss der ersten Füllung 91 ausgestaltete konvexe erste Oberfläche 18. Der kegelförmige Abschnitt weist außerdem einen umlaufenden Einstich auf, in dem ein Distanzring, beispielsweise ein O-Ring zur zentrierten Anordnung der ersten Füllung 91 sowie zur Einstellung eines Luftspaltes 4 dient.

Die zweite Füllung 92 des zweiten Teils 32 ist dementsprechend mit einer konkav ausgebildeten zweiten Fläche 19 versehen. Die zweite Fläche 19 ist korrespondierend zu der ersten Fläche 18 ausgebildet, so dass ein möglichst verlustfreier Übergang zwischen der ersten Füllung 91 und der zweiten Füllung 92 erfolgen kann.

Die zweite Füllung 92 ist ansonsten im Wesentlichen wie die zweite Füllung 92 des Ausführungsbeispiels gemäß Figur 1 ausgestaltet, wobei im Unterschied zu der Ausgestaltung gemäß Figur 1 die freie Oberfläche 21 nicht linsenförmig sondern kegelförmig ausgestaltet ist. Eine kegelförmige Ausgestaltung der freien Oberfläche 21 ermöglicht ein besseres Abtropfverhalten an der freien Oberfläche 21, was insbesondere bei einer Betauung der freien Oberfläche 21 vorteilhaft ist.

In dem in Figur 2 dargestellten Ausführungsbeispiel ist an dem Behälter 50 und der Befestigungsanordnung 7 eine Verbindung der Hornantenne 1 mit dem Behälter 50 über einen Schraubflansch gezeigt. In korrespondierend zueinander ausgebildeten und miteinander fluchtenden Bohrungen 23 sind Schrauben 24 zur Befestigung der Hornantenne 1 an dem Behälter 50 angeordnet in den korrespondierend zueinander angeordneten Bohrungen 23 eine Schraube 24 zur Verschraubung des zweiten Teils 32 des Antennenhorns mit dem Behälter 50 gezeigt. Auf diese Weise ist eine einfache und sichere Halterung des zweiten Teils 32 und damit der gesamten Hornantenne 1 gewährleistet.

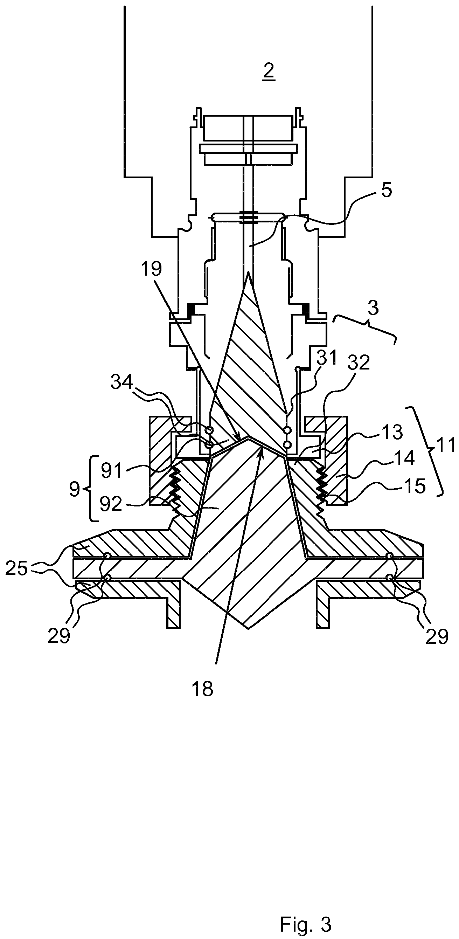

Figur 3 zeigt ein weiteres Ausführungsbeispiel eines Radar-Füllstandmessgerätes mit einer Hornantenne 1 gemäß der vorliegenden Anmeldung.

Das in Figur 3 dargestellte Ausführungsbeispiel unterscheidet sich von dem in Figur 1 dargestellten Ausführungsbeispiel im Wesentlichen durch die Ausgestaltung der Verbindungsanordnung 11, mit der der erste Teil 31 und der zweite Teil 32 des Antennenhorns 3 aneinander befestigt sind. In dem in Figur 3 dargestellten Ausführungsbeispiel weist der erste Teil 31 des Antennenhorns 3 einen umlaufenden Rand 13 auf, an dem sich eine Überwurfmutter 14 abstützt. Die Überwurfmutter 14 greift in ein an dem zweiten Teil 32 ausgebildetes Außengewinde 14 ein, so dass der erste Teil 31 und der zweite Teil 32 mit Hilfe der Überwurfmutter 14 miteinander verspannt werden können.

Die übrige Ausgestaltung des in Figur 3 dargestellten Ausführungsbeispiels entspricht dem der Figur 1 und soll daher zur Vermeidung von Wiederholungen nicht nochmals näher beschrieben werden.

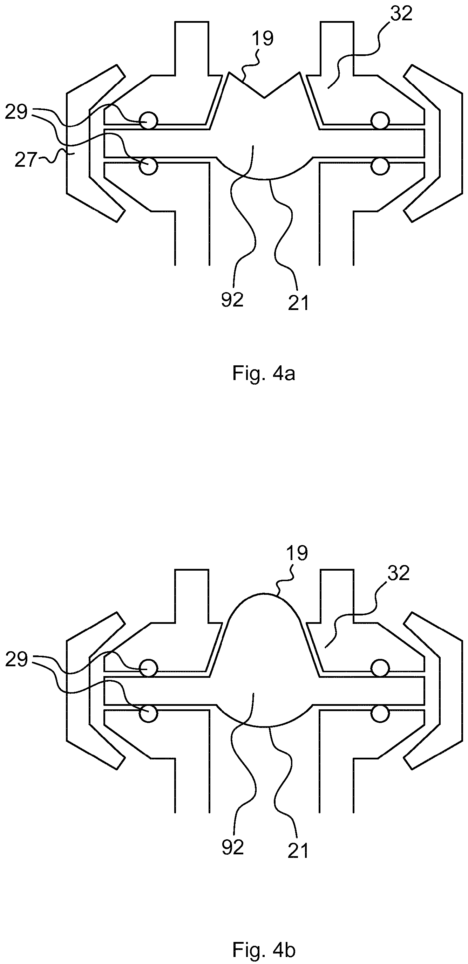

Die Figuren 4a und 4b zeigen unterschiedliche Ausgestaltungsformen der zweiten Füllung 92, wobei in Figur 4a eine konkav konvexe Ausgestaltung der zweiten Füllung 92 und in Figur 4b eine konvex konvexe Ausgestaltung der zweiten Füllung 92 gezeigt ist.

Eine konkav konvexe Ausgestaltung bedeutet, dass die zweite Oberfläche 19 konkav, vorliegend trichterförmig und die freie Oberfläche 21 konvex, vorliegend kugelabschnittförmig ausgestaltet ist.

Bei der in Figur 4b dargestellten konvex-konvexen Ausgestaltungen sind sowohl die zweite Oberfläche 19 als auch die freie Oberfläche 21 beide konvex und im vorliegenden Ausführungsbeispiel kugelabschnittförmig geformt.

Durch eine geeignete Wahl der Oberflächenkontur der einzelnen Abschnitte der Füllung 9 sowie eine geeignete Materialwahl kann eine besonders günstige Fokussierung ein optimiertes Abtropfverhalten sowie ein optimierter Übergang von dem ersten Teil 31 des Antennenhorns 3 auf den zweiten Teil 32 des Antennenhorns 3 erreicht werden.

Die in den Figuren 4a und 4b dargestellten Ausgestaltungsformen sollen lediglich beispielhaft verdeutlichen, dass eine Vielzahl unterschiedlicher Konturen möglich sind und im Rahmen der vorliegenden Erfindung liegen.

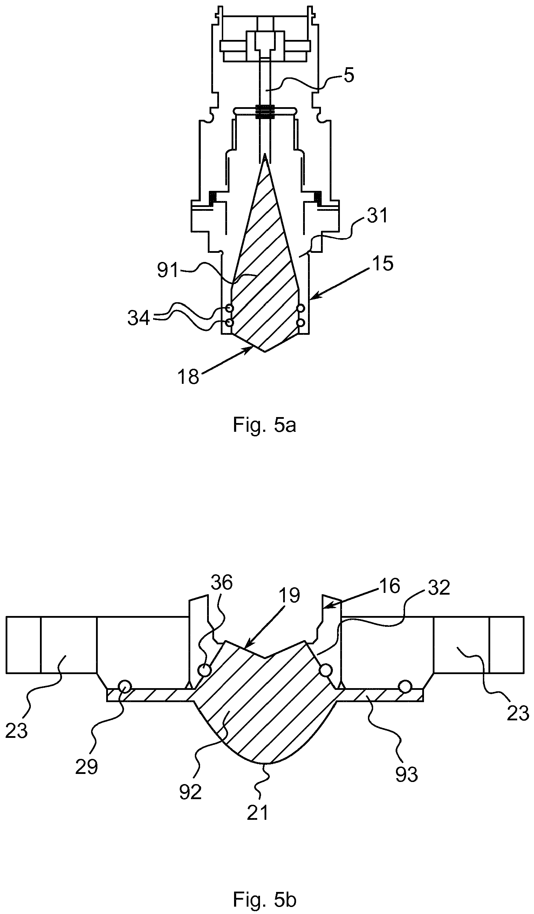

In den Figuren 5a und 5b ist ein viertes Ausführungsbeispiel eines Radar-Füllstandmessgerätes mit einer Hornantenne 1 gemäß der vorliegenden Anmeldung gezeigt, wobei in Figur 5a der erste Teil 31 der Hornantenne 1 und in Figur 5b der zweite Teil 32 der Hornantenne 1 dargestellt ist. Die beiden Teile 31, 32 sind also in getrenntem Zustand dargestellt, wobei die Verbindungsanordnung 11 im vorliegenden Ausführungsbeispiel als ein an dem ersten Teil 31 angeordnetes Außengewinde 15 und ein korrespondierend dazu an dem zweiten Teil 32 ausgebildetes Innengewinde 16, ausgestaltet ist. Die erste Oberfläche 18 der ersten Füllung 91 ist im vorliegenden Ausführungsbeispiel kegelförmig ausgestaltet, d. h., die erste Füllung 91 weist eine konvexe erste Oberfläche 18 auf. Korrespondierend hierzu weist die zweite Füllung 92 einen konkav, vorliegend trichterförmig ausgestaltete zweite Oberfläche 19 auf, die korrespondierend zu der ersten Oberfläche 18 ausgebildet ist. Im zusammengefügten Zustand des ersten Teils 31 und des zweiten Teils 32 des Antennenhorns 3 liegen damit die erste Oberfläche 18 und die zweite Oberfläche 19 flächenbündig aufeinander.

Die zweite Füllung 92 ist gegenüber dem zweiten Teil 32 über im Bereich des flanschartigen Randes 93 angeordnete Dichtungen 29 sowie zusätzliche Dichtungen 36 im Bereich einer trichterförmigen Erweiterung des Antennenhorns abgedichtet. Eine Verbindung des zweiten Teils 32 mit einem Behälter 50 erfolgt über einen Flansch, der vorliegend mit entsprechenden Bohrungen 23 für eine Verschraubung des Flansches mit einer korrespondierenden Anordnung am Behälter 50 versehen ist.

Die erste Füllung 91 ist in dem ersten Teil über weitere Dichtungen 34 abgedichtet, so dass der erste Teil 31 des Antennenhorns gegenüber einem Eindringen von Verschmutzungen geschützt ist. Rückseitig ist ferner der Hohlleiter als Speisung 5 angeordnet, der eine Verbindung zur Elektronik 2 (vorliegend nicht dargestellt) herstellt.

### Bezugszeichenliste

- 1: Hornantenne
- 2: Elektronik
- 3: Antennenhorn
- 5: Speisung
- 7: Befestigungsanordnung
- 9: Füllung
- 11: Verbindungsanordnung
- 13: Rand
- 14: Überwurfmutter
- 15: Außengewinde
- 16: Innengewinde
- 17: Außengewinde
- 18: erste Oberfläche
- 19: zweite Oberfläche
- 21: freie Oberfläche
- 23: Bohrung
- 24: Schraube
- 25: Klemmkontur
- 27: Klemmbügel
- 29: Dichtungen
- 31: erster Teil
- 32: zweiter Teil
- 34: weitere Dichtungen
- 36: zusätzliche Dichtungen
- 50: Behälter
- 91: erste Füllung
- 92: zweite Füllung
- 93: Rand
- A: Hauptabstrahlrichtung
- R: Radialrichtung

## Patentansprüche

1. Hornantenne (1) für ein Radarmessgerät, insbesondere ein Radar-Füllstandmessgerät mit
- einem vorderseitig in einer Hauptabstrahlrichtung A abstrahlenden Antennenhorn (3) mit einer rückseitigen Speisung (5),
- einer Befestigungsanordnung (7) zur Befestigung an einem Behälter (50)
- und einer wenigstens teilweisen Füllung (9) des Antennenhorns (3) mit einem Feststoff,
wobei das Antennenhorn (3) wenigstens zweiteilig mit einem ersten rückseitigen, geräteseitigen Teil (31) und einem zweiten vorderseitigen, behälterseitigen Teil (32) ausgebildet ist, **dadurch gekennzeichnet, dass** der erste Teil (31) eine erste Füllung (91) und der zweite Teil (32) eine zweite Füllung (92) aufweist, und wobei die zweite Füllung (92) so ausgestaltet ist, dass sie gemeinsam mit dem zweiten Teil (32) einen Behälter (50), wenn sie an diesem angeordnet ist, nach außen hin Z abdichtet.

2. Hornantenne (1) gemäß Anspruch 1,
**dadurch gekennzeichnet, dass** die der zweite Teil (32) als Befestigungsanordnung (7) ausgebildet ist.

3. Hornantenne (1) gemäß einem der vorhergehenden Ansprüche, **dadurch gekennzeichnet, dass** die Befestigungsanordnung (7) als Flansch, als Verschraubung oder als Einschweißstutzen ausgebildet ist.

4. Hornantenne (1) gemäß Anspruch 1,
**dadurch gekennzeichnet, dass**
der erste Teil (31) und der zweite Teil (32) über eine Verbindungsanordnung (11) lösbar verbindbar ausgebildet sind.

5. Hornantenne (1) gemäß Anspruch 4,
**dadurch gekennzeichnet, dass**
die Verbindungsanordnung (11) als Verschraubung, Bajonettverbindung, Klemmverbindung, Steckverbindung oder Flansch ausgebildet ist.

6. Hornantenne (1) gemäß Anspruch 4 oder 5,
**dadurch gekennzeichnet, dass**
der erste Teil (31) einen umlaufenden Rand (93) und eine sich an dem Rand (93) abstützende Überwurfmutter (14) und der zweite Teil (32) ein korrespondierend zu der Überwurfmutter (14) ausgebildetes Außengewinde (15) aufweist.

7. Hornantenne (1) gemäß einem der Ansprüche 4 oder 5, **dadurch gekennzeichnet, dass**
der zweite Teil (23) ein Innengewinde (16) und der erste Teil (31) ein korrespondierend dazu ausgebildetes Außengewinde (15) aufweist.

8. Hornantenne (1) gemäß einem der Ansprüche 4 bis 8, **dadurch gekennzeichnet, dass**
die Verbindungsanordnung (11) eine Anpressvorrichtung aufweist.

9. Hornantenne (1) gemäß einem der vorhergehenden Ansprüche, **dadurch gekennzeichnet, dass**
der erste Teil (31) und der zweite Teil (32) so ausgebildet sind, dass sie in verbundenem Zustand eine definierte Ausrichtung zueinander aufweisen.

10. Hornantenne (1) gemäß einem der vorhergehenden Ansprüche, **dadurch gekennzeichnet, dass**
der erste Teil (31) eine erste Füllung (91) und der zweite Teil (32) eine zweite Füllung (92) aufweist, wobei zumindest die zweite Füllung (92) so ausgebildet ist, dass sie fokussierende Eigenschaften für ein von der Hornantenne (1) abgestrahltes Feld aufweist.

11. Hornantenne (1) gemäß Anspruch 10,
**dadurch gekennzeichnet, dass**
eine dem ersten Teil (31) zugewandten Oberfläche (21) der zweiten Füllung (92) konvex ausgebildet ist.

12. Hornantenne (1) gemäß einem der Ansprüche 10 oder 11, **dadurch gekennzeichnet, dass**
die zweite Füllung (92) sich in Hauptabstrahlrichtung (A) konisch erweiternd ausgebildet ist.

13. Hornantenne (1) gemäß einem der Ansprüche 10 bis 12, **dadurch gekennzeichnet, dass**
die zweite Füllung (92) einen flanschartigen Rand (93) aufweist.

14. Radar-Messgerät, insbesondere Radar-Füllstandmessgerät mit einer Hornantenne (1) gemäß einem der Ansprüche bis 13.

## Claims

1. A horn antenna (1) for a radar measuring device, in particular a radar filling level measuring device, with
- an antenna horn (3), which emits at the front in a main emission direction A and comprises a rear feed (5),
- a fastening assembly (7) for attachment to a container (50),
- and an at least partial filling (9) of the antenna horn (3) with a solid substance,
wherein the antenna horn (3) is formed from at least two parts, with a first rear part (31) on the device side and a second front part (32) on the container side,
**characterized in that** the first part (31) has a first filling (91) and the second part (32) a second filling (92), and wherein
the second filling (92) is configured in such a manner that, together with the second part (32), it seals a container (50) towards the outside if it is disposed thereon.

2. The horn antenna (1) according to claim 1,
**characterized in that**
the second part (32) is configured as a fastening assembly (7).

3. The horn antenna (1) according to any one of the preceding claims, **characterized in that**
the fastening assembly (7) is configured as a flange, screw connection or weld-in socket.

4. The horn antenna (1) according to claim 1,
**characterized in that**
the first part (31) and the second part (32) are configured so as to be connectable via a connecting assembly (11).

5. The horn antenna (1) according to claim 4,
**characterized in that**
the connecting assembly (11) is configured as a screw connection, bayonet connection, clamping connection, plug-in connection or a flange.

6. The horn antenna (1) according to claim 4 or 5,
**characterized in that**
the first part (31) has a peripheral edge (93) and a union nut (14) supported on the edge (93), and the second part (32) has an external thread (15) configured to correspond to the union nut (14).

7. The horn antenna (1) according to any one of the claims 4 or 5, **characterized in that**
the second part (23) has an internal thread (16) and the first part (31) has an external thread (15) configured to correspond thereto.

8. The horn antenna (1) according to any one of the claims 4 to 8, **characterized in that**
the connecting assembly (11) includes a press-on device.

9. The horn antenna (1) according to any one of the preceding claims, **characterized in that**
the first part (31) and the second part (32) are configured in such a manner that they have a defined orientation with respect to one another in the connected state.

10. The horn antenna (1) according to any one of the preceding claims, **characterized in that**
the first part (31) has a first filling (91) and the second part (32) a second filling (92), wherein at least the second filling (92) is configured in such a manner that it has focusing properties for a field emitted by the horn antenna (1).

11. The horn antenna (1) according to claim 10,
**characterized in that**
a surface (21) of the second filling (92) facing towards the first part (31) has a convex configuration.

12. The horn antenna (1) according to any one of the claims 10 or 11, **characterized in that**
the second filling (92) is configured so as to conically expand in the main emission direction (A).

13. The horn antenna (1) according to any one of the claims 10 to 12, **characterized in that**
the second filling (92) has a flange-like edge (93).

14. A radar measuring device, in particular a radar filling level measuring device, with a horn antenna (1) according to any one of the claims 1 to 13.

## Revendications

1. Antenne cornet (1) pour un appareil de mesure par radar, en particulier un appareil de mesure de niveau de remplissage par radar, comprenant
- un cornet d'antenne (3) rayonnant face avant dans une direction de rayonnement principale (A) et ayant une alimentation (5) face arrière,
- un agencement de fixation (7) pour la fixation à un récipient (50)
- et une charge (9) au moins partielle du cornet d'antenne (3), constituée d'une matière solide,
dans laquelle le cornet d'antenne (3) est réalisé à partir d'au moins deux parties comprenant une première partie arrière (31) du côté de l'appareil et une deuxième partie avant (32) du côté du récipient,
**caractérisée par le fait que** la première partie (31) présente une première charge (91) et la deuxième partie (32) présente une deuxième charge (92), et dans laquelle
la deuxième charge (92) est conçue de telle sorte qu'elle rend étanche vers l'extérieur, conjointement avec la deuxième partie (32), un récipient (50) lorsqu'elle est disposée sur celui-ci.

2. Antenne cornet (1) selon la revendication 1, **caractérisée par le fait que** la deuxième partie (32) est conçue en tant qu'agencement de fixation (7).

3. Antenne cornet (1) selon l'une quelconque des revendications précédentes, **caractérisée par le fait que** ledit agencement de fixation (7) est réalisé en tant que bride, en tant que vissage ou en tant que tubulure soudée.

4. Antenne cornet (1) selon la revendication 1, **caractérisée par le fait que** la première partie (31) et la deuxième partie (32) sont conçues de manière à pouvoir être reliées de façon amovible par le biais d'un agencement de jonction (11).

5. Antenne cornet (1) selon la revendication 4, **caractérisée par le fait que** l'agencement de jonction (11) est réalisé en tant que vissage, liaison à baïonnette, liaison par serrage, liaison par emboîtement ou en tant que bride.

6. Antenne cornet (1) selon la revendication 4 ou 5, **caractérisée par le fait que** la première partie (31) présente un bord circonférentiel (93) et un écrou-raccord (14) s'appuyant sur le bord (93) et que la deuxième partie (32) présente un filetage extérieur (15) réalisé de manière correspondante à l'écrou-raccord (14).

7. Antenne cornet (1) selon l'une quelconque des revendications 4 ou 5, **caractérisée par le fait que** la deuxième partie (23) comprend un taraudage (16) et que la première partie (31) comprend un filetage extérieur (15) réalisé de manière correspondante à celui-ci.

8. Antenne cornet (1) selon l'une quelconque des revendications 4 à 8, **caractérisée par le fait que** l'agencement de jonction (11) comprend un dispositif d'application de pression.

9. Antenne cornet (1) selon l'une quelconque des revendications précédentes, **caractérisée par le fait que** la première partie (31) et la deuxième partie (32) sont conçues de telle sorte qu'elles présentent un alignement défini l'une par rapport à l'autre lorsqu'elles sont reliées.

10. Antenne cornet (1) selon l'une quelconque des revendications précédentes, **caractérisée par le fait que** la première partie (31) présente une première charge (91) et la deuxième partie (32) présente une deuxième charge (92), dans laquelle au moins la deuxième charge (92) est conçue de manière à présenter des propriétés de focalisation pour un champ émis par l'antenne cornet (1).

11. Antenne cornet (1) selon la revendication 10, **caractérisée par le fait qu'**une surface (21) de la deuxième charge (92), qui est tournée vers la première partie (31) est réalisée de manière convexe.

12. Antenne cornet (1) selon l'une quelconque des revendications 10 ou 11, **caractérisée par le fait que** la deuxième charge (92) est conçue de manière à s'élargir coniquement dans la direction de rayonnement principale (A).

13. Antenne cornet (1) selon l'une quelconque des revendications 10 à 12, **caractérisée par le fait que** la deuxième charge (92) présente un bord (93) de type bride.

14. Appareil de mesure par radar, en particulier appareil de mesure de niveau de remplissage par radar, comprenant une antenne cornet (1) selon l'une quelconque des revendications 1 à 13.
